# EUROPEAN PATENT SPECIFICATION

(11) **EP 3 920 688 B1**
(45) Date of publication and mention of the grant of the patent: **03.12.2025**
(21) Application number: 20704101.3
(22) Date of filing: 03.02.2020
(51) Int. Cl.: A01K 11/00, A01J 5/007, A01K 1/00, A01K 5/02, A01K 7/06, A01K 29/00

(54) **SYSTEM WITH SMART TAG FOR ANIMALS**
SYSTEM MIT INTELLIGENTEM ETIKETT FÜR TIERE
SYSTÈME AVEC ÉTIQUETTE INTELLIGENTE POUR ANIMAUX

(30) Priority: 05.02.2019 NL 2022510
(43) Date of publication of application: 15.12.2021
(73) Proprietor: Nedap N.V., 7141 DC Groenlo (NL)
(72) Inventor: VAN DIJK, Jeroen Martin, 7141 DC Groenlo (NL)
(74) Representative: V.O.
(86) International application number: PCT/NL2020/050057
(87) International publication number: WO 2020/162745

(56) References cited:
- US-A1- 2018 160 649

## Description

### Field of the invention

The present invention relates to a system comprising at least one smart tag for animals on a farm and a multiplicity of devices which are configured to have an interaction with the animals, the smart tag being provided with at least one transmitting and receiving apparatus, at least one processor, at least one memory, and at least one sensor which are communicatively connected with each other. ,

Within livestock farming, use is made of, *inter alia,* tag systems for monitoring animals. Via such tags, measurements can be carried out and the behaviors of the animals can be kept an eye on. The tags are read out wirelessly via a reader device for exchanging data. The need exists, however, to improve the integration of such systems.

US application nr. US 2018/0160649 relates to management of animals and, more particularly, to comprehensive systems and methods for assessing livestock health and providing nutritional supplements.

It is an object of the present invention to provide a system in which, with the aid of the tags and with minimal intervention of a user, the independence of the animals on the farm can be augmented.

To this end, the invention according to a first aspect thereof provides a system according to claim 1. Preferred embodiments are defined in the dependent claims.

The smart tags from the system according to the present invention are provided with a memory and processor configured to send command data via the transmitting and receiving apparatus. To that end, the command data may for instance be stored in the memory of the smart tag. On the basis of a trigger, the processor can retrieve the command data and cause the same to be sent via the transmitting and receiving apparatus for selectively invoking and controlling the device.

The trigger can be implemented in multiple different manners. The trigger can be, for example, a signal that has been received from the sensor. Also compliance with a particular condition can generate a trigger, for example: exceeding of a limiting value by a measuring signal from a sensor, the proximity of another smart tag, the lapse of a defined length of time after another event or action, receiving by the smart tag of a signal via the transmitting and receiving apparatus, *et cetera.*

Such a system particularly enables a large number of processes on the farm to be automated, and to be dealt with completely with the aid of the smart tag. This can in that case be usually done without necessary intervention of a central computer which is communicatively connected with a smart tag and, for example, receives condition data or physical data of an animal from a smart tag worn by an animal and/or without intervention of a user, although the latter - likewise through the smart tags - will naturally be able to keep control of the processes involved.

In some embodiments of the system, the smart tag is configured to selectively control a device of a multiplicity of different type devices directly, autonomously and wirelessly. Directly is here understood to mean that the smart tag without intervention of other systems (such as Wi-Fi or other data communication platform) can control the respective device by sending the command data directly from the smart tag to the device. The device is, to that end, provided with a receiver or transceiver with which the command data can be received.

In a specific embodiment, the multiplicity of devices comprises at least one controllable automatic feeder, while the command data are configured to autonomously control the automatic feeder and relate to the amount of feed and the moment when a portion of feed can be provided by the automatic feeder to an animal wearing the smart tag. In this embodiment, the smart tag may be configured to comprise data being indicative of what ration of concentrate the respective animal gets. This data may be recorded in the tag, or may possibly be obtained from outside (be queried by the tag, for example). The information regarding the ration may have been passed on to the smart tag via a data link (for example, a wireless 433MHz link). If the animal comes near a feeding station, the tag will tell the feeding station what amount of feed the animal is allowed to have at that moment. For example, the tag passes on what amount of dry food chunks a cow can have at that moment. After this, the obtained amount of feed is deducted from its registered account in the tag. Communication with the device may be configured to ensure the obtained portion is in effect deducted from the account of the respective animal that is eating. The communication may for instance have a small distance range or make it possible in any other manner to determine the respective animal that is in the process of eating. In this way, it is ensured that the portion concerned is deducted in relation to the animal that is eating the feed. Furthermore, communication with a small distance range can be executed with a low power, which saves energy in the tag. An additional advantage is that feed registration is centralized in the tag, which means it makes no difference at which feeding station the animal is. Accordingly, no registration tables for thousands of animals are necessary.

An additional advantage is obtained when the communication between the smart tag and the feeding station takes place directly, as already described hereinabove. That way, feeding is made independent of the operation of other systems - such as Wi-Fi or the electricity supply thereof, or the internet. The animal always gets its feed.

According to a further embodiment, the command data are configured to autonomously control the automatic feeder in order that only a desired kind of feed is dispensed to the animal wearing the smart tag. These details, too, may be stored in the memory, and if desired be periodically updated. The animal then receives only the specified kind of feed. This provides advantages when an animal is on a particular diet. Also, the composition of the feed can thus be simply tuned to, for example, the age or other personal characteristics or properties of the animal.

According to a further embodiment, the multiplicity of devices includes at least one controllable access such as a separation gate, while the command data are configured to autonomously control the access and determine whether and more particularly when the access can be opened. The advantage of such a system is that when an animal should be separated for reasons of health or other reasons, this can be done automatically with the aid of the smart tag. An example of such an application concerns the smart tag keeping a record of the estrus of the cow. To this end, the smart tag may contain an algorithm for determining the estrus. Alternatively or additionally, based on behaviors of the cow itself or with respect to other cows, the estrus may be determined by the smart tag. Based on these details, the tag can then separate the cow automatically, for example for insemination. Automatically determining the estrus requires relatively little exchange of data with other devices when the smart tag itself can do this. That is why such an application can also be implemented with the aid of long distance communication, where data speeds are lower.

Automatic separation, of course, can also take place on the basis of other specific details, and neither is the application limited to cows. The tag may, for example, through sensors and/or based on observations of a behavior of the animal, also establish whether an animal might be ill, and separate the animal on that ground. Also, it is possible to separate an animal based on, for example, the lapse of a defined length of time. Thus, it is for instance possible, via the tag, to periodically separate an animal for checks, by setting in the tag a time period for separation.

According to a further embodiment, the multiplicity of devices includes at least one controllable milking robot, while the command data are configured to autonomously control a milking robot, and determine whether and if so when an animal wearing the smart tag can be milked. Such a determination can take place, for example, based on an established condition of the animal or on the time that has elapsed since the last milking action. The smart tag may be configured to determine this entirely autonomously on the basis of data obtained from sensors or received via the transmitting and receiving apparatus.

Further embodiments are characterized in that the transmitting and receiving means comprise a resonant circuit which responds by selectively sending out command data when the smart tag is introduced into an electromagnetic interrogation field, wherein the selection depends on a code of the interrogation field and wherein in particular the responding of the resonant circuit is based on LF (Low Frequency) technology. An electromagnetic interrogation field may for instance be generated by one of the devices, and on the basis thereof the smart tag (the label) may be configured to recognize the device and to adapt the command data thereto. To that end, the smart tag may, for example, comprise a resonant circuit. For example, the smart tag may be suitable, through the resonant circuit, for communication according to a standardized communication protocol for information exchange over small distances. One step further, via the generated interrogation field, the device may also communicate particular status information to the label (for example: 'device out of operation' or 'ready for use'). The smart tag may then send correspondingly adapted command data (for example, in response to 'device out of operation' the command 'start initialization').

Further embodiments are characterized in that the label is configured to receive sound and in response to the received sound to respond by selectively sending out the command data, said selection depending on the content of the received sound. Sound (for example ultrasonic) may for instance be generated by one of the devices, and on the basis thereof the smart tag (the label) may be configured to recognize the device and adapt the command data thereto. One step further, via the generated sound, the device may also communicate particular status information to the label (for example: 'device out of operation' or 'ready for use'). The smart tag may then send correspondingly adapted command data (for example, in response to 'device out of operation' the command 'start initialization').

Further embodiments are characterized in that the label is configured to receive light and in response to the received light to respond by selectively sending out the command data, the selection depending on the content of the received light. Light (for example infrared) may for instance be generated by one of the devices, and on the basis thereof the smart tag (the label) may be configured to recognize the device and adapt the command data thereto. One step further, via the generated light the device can also communicate particular status information to the label (for example: 'device out of operation' or 'ready for use'). The smart tag may then send correspondingly adapted command data (for example, in response to 'device out of operation' the command 'start initialization').

According to particular embodiments, each of the devices is configured to emit an interrogation field with a code which represents the type of device or an identity of the device. Based thereon, the smart tag can simply recognize the devices and thus generate the proper command data for the respective devices.

Further embodiments are characterized in that the smart tag is configured to receive information from at least one of the devices and to store the information in the memory so that in particular this information can be read out at the smart tag later. Such storage can be advantageously applied for recording specific details, such as the eating behavior of an animal (through data obtained from a feeding station) or the production of an animal (through data obtained from a milking station (with cows, sheep or goats), or a laying station (with chicken)).

According to preferred embodiments, the system is characterized in that the system further comprises a central computer while the smart tag is configured to build up a communicative connection with the central computer and/or that the smart tag is configured to build up a communicative connection with a cloud service. The use of a central computer or cloud service augments the application options of a system according to the invention, in that central administration of data, additional intelligence of the system, and the cooperation with mobile equipment become possible (such as smartphones, tablet computers, laptops, and other portable computers). The term "cloud service" is understood to mean: a service accessible through a data communication network, such as a software application or server which, considered from the farm, can be approached locally. An example of a cloud service is, *inter alia,* a software-as-a-service (SAAS) concept, a cloud storage facility (storage through one or more servers accessible locally, via the internet or other wide area network), or an online database. However, the invention is not limited to a specific cloud service. Specific embodiments of the above implementations are characterized in that the communicative connection with the central computer and/or the cloud service comprises, for example, a Wi-Fi connection and/or the internet.

In particular embodiments, the smart tag may be configured to send data obtained with the at least one sensor to the central computer and/or the cloud service. Also, in accordance with some embodiments, the smart tag may be configured to send data obtained from one of the devices to the central computer and/or the cloud service. The central computer and/or the cloud service may in specific instances thereof be configured, on the basis of the received data obtained with the at least one sensor, to determine a status of the animal. The state of health of the animal may for instance be established on the basis of the data from sensors. Possibly, use may also be made, additionally or alternatively, of the data from one or more devices cooperating with the system. Further, the data that have been obtained from devices may be recorded, for instance for monitoring the status of the animal or for administrative purposes. For example, a milking robot cooperating with the system (as described above) can pass on the amount of milk yielded per animal to the central computer or the cloud service. When a cow produces relatively little milk, this is recorded, and additionally, for instance in combination with the data from sensors or other stored data of the cow, it may be established whether the cow is healthy. Instead of or additionally to the above, the system, according to embodiments, may also be characterized in that the smart tag is configured, on the basis of data obtained with the at least one sensor, to determine a status of the animal and possibly to store information about the status in the memory. The above-described assessments can also be made by the processor in the smart tag, with or without assistance or intervention of a central computer or cloud service.

In accordance with some embodiments of the system, at least a part of the command data have been received by the smart tag with the aid of the transmitting and receiving means. A central server or cloud service may be configured, for example, to instruct the operation of particular devices by sending the instructions to the smart tag of the animal concerned. Also, it is possible that these instructions are temporarily stored in the smart tag until the animal is in the vicinity of the relevant device or makes use thereof. Thus, an animal may for example be selected in advance in order for it, at the first opportunity, or after the lapse of a defined length of time, to be separated for a medical check or other action. Another possibility is that an animal is selectable via the system to go on a particular diet, and the smart tag of the respective animal receives instructions to send particular command data to a feeding station. Yet another possibility is that an animal can be selected to temporarily not perform a particular act or execute it differently - for instance, a cow may be marked as being in calf or recovering from calving and instructions may be sent to a milking robot to store the milk produced by this cow separately from the rest of the milk from other cows, or perhaps to temporarily bar this cow from milking.

According to some embodiments of the system, at least a part of the command data have been determined with he aid of the at least one sensor and the at least one processor. The smart tag, provided with the processor, may thus, on the basis of the data from the sensor or sensors, control devices in a desired manner. An example has already been given above with respect to the estrus of cows. The smart tag can execute an algorithm on the ground of which it can be established whether a cow is estrous. This may, if so desired, be supplemented with data from sensors to increase the reliability of the ascertainment of the estrus of the respective cow. For example, the smart tag may establish the proximity of a bull, for example based on the proximity of the smart tag of a bull. A bull's increased interest in the respective cow may be indicative of estrus of the cow, so in combination with the data determined with the algorithm in the smart tag the reliability of the outcome is thus increased. Based on these details, the smart tag can now send command data to the separation gate in order to separate the cow for insemination.

Also, it is possible, in accordance with some embodiments, that at least a part of the command data have been determined with the aid of the processor on the basis of data obtained from one of the devices. Hereinabove, already an example has been given of a cow whose milk production is falling appreciably, and where, on the basis of the data from the milking robot, this cow can be marked as possibly ill or less healthy. Based on this information, the smart tag can then determine command data for a separation gate or feeding station for separating the cow or putting the cow on a diet.

According to preferred embodiments, the system is characterized in that the at least one processor comprises at least a neural network. In this way, a system can be obtained in which the command data sent by the smart tag of each of the animals are tailored to the behaviors or specific needs of the individual animal or per animal species, and/or to the processes and daily schedule of the respective farm where the system has been installed.

### Brief description of the figures

The invention will be discussed below on the basis of specific embodiments thereof, not intended as limiting, with reference to the appended figures, in which:
Figure 1 shows a schematic overview of a system according to the present invention;
Figure 2 shows a further schematic representation of the operation of the system according to the present invention;
Figure 3 shows the application of a system according to the present invention to a milking robot.

### Detailed description

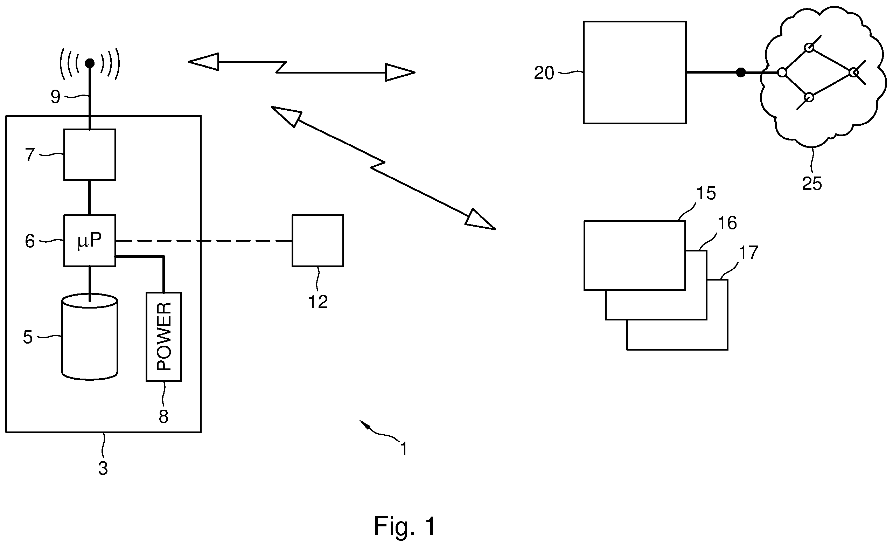

Figure 1 shows a schematic representation of a system 1 according to the present invention. The system 1 comprises a multiplicity of labels or smart tags 3. Each of the smart tags 3 is coupled to an animal for use on a farm, for example. Each smart tag 3 contains a unique identification code belonging to the respective animal wearing the smart tag 3. The smart tag 3 may for instance be worn on the collar of an animal or, for example, as an ear tag. This is not further shown in Figure 1. The smart tag 3 according to the present invention comprises a processor 6 and a memory 5 for data storage. Also, the smart tag 3 is provided with a battery or power supply 8. This can be, for example, a button cell or other type of battery. The smart tag 3 is further provided with a transmitting and receiving apparatus 7 which is coupled with an antenna 9 for wirelessly transmitting data. While not shown in Figure 1, the smart tag 3 may further be provided with a resonant circuit for data transfer in a manner known per se. Such a resonant circuit is then, similarly to the antenna 9, coupled to the transmitting and receiving apparatus for sending and receiving data. The processor 6 may be physically or wirelessly coupled with one or more sensors 12 which are in communication with the respective animal, or which make particular ambient parameters measurable. Thus, sensor 12 can be, for example, a temperature sensor which reflects the internal temperature of the animal. Also, it is possible that sensor 12 is an optical sensor for measuring blood levels, or a motion sensor for establishing movements to be made by the animal, or a sensor with which the proximity of other smart tags 3 can be established.

The smart tags 3 may, in this last instance, also communicate directly with each other via the antenna 9 in order to be able to establish the proximity of one or more smart tags in the vicinity of smart tag 3. Wireless communication via the transmitting and receiving apparatus 7 and antenna 9 is schematically represented in Figure 1 by two double-headed arrows. According to the figure, the smart tag 3 communicates, for example, with a central computer unit 20 which is in communication with a wide area network 25. The wide area network (WAN) may be, for example, the internet, or may be a data communication network such as UMTS or GPRS. The wireless communication via antenna 9 with the different devices 15, 16, 17 and 20 can take place in different manners. According to a preferred embodiment, the data communication can take place via a local Wi-Fi network. Also, it is possible that the transmitting and receiving apparatus 7 itself sets up a local Wi-Fi network which belongs to the smart tag 3. Other devices, such as the central server 20 or the devices 15, 16 and 17 can thus communicate directly with the smart tag 3 via the Wi-Fi network set up by the smart tag 3. Communication via protocols other than Wi-Fi is also possible. Thus, use can also be made of known active or passive tags provided with resonant circuits. Also data communication via communication protocols for data communication via a mobile network can be used for transmitting data. In this last instance, each smart tag 3 then needs to be implemented, for example, with a SIM card. A person skilled in the art will appreciate in what way the data communication between the different devices in a system 1 according to the present invention can take place.

The devices 15, 16 and 17 can be a multiplicity of different devices which are in and around the farm. Thus, device 15 can be a milking robot, device 16 a feeding station, and device 17 a separation gate. Data communication with other devices than the aforementioned specific devices that are used on farms, can also take place. In the present description, frequently reference is made to the use on a farm with cows. However, the system according to the present invention can also be applied for managing farm processes with other animals than cows, such as: pigs, horses, chicken, goats, sheep, et cetera. One of the devices 15, 16 or 17 on a chicken farm may for example be a laying station, while milking robots such as milking robot 15 may also be used on a farm with sheep or goats.

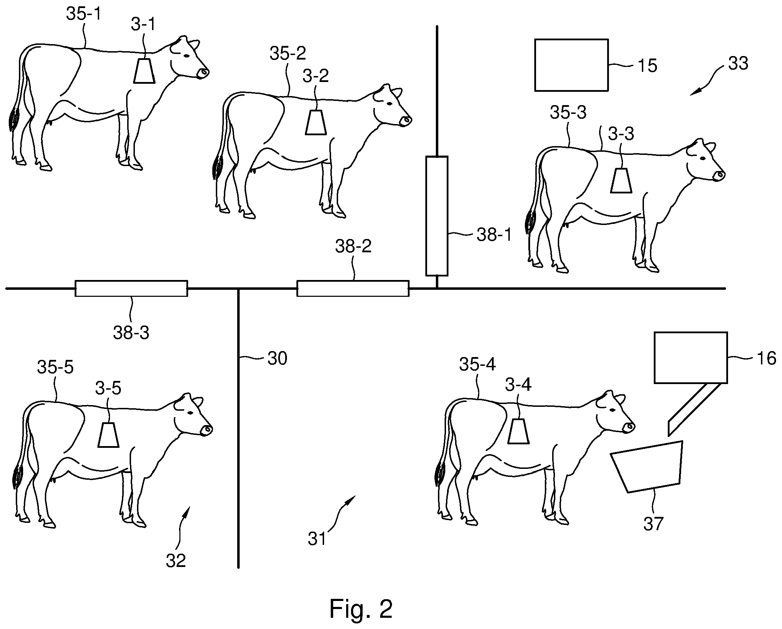

Figure 2 schematically shows the operation of a system 1 according to the present invention. In Figure 2 a multiplicity of cows 35-1, 35-2, 35-3, 35-4 and 35-5 can be seen. Each of the cows 35-1 through 35-5 is provided with a smart tag 3-1, 3-2, 3-3, 3-4 and 3-5. The smart tags 3-1 through 3-5 are similar smart tags to the smart tag 3 shown in Figure 1. Figure 2 shows the space on the farm which is divided into four mutually separated areas, including the areas 29, 31, 32 and 33. In area 31 is feeding station 16 which is in communication with a trough 37. Area 32 is a separation area in which cows 35 can be isolated for particular reasons (for example, in calf, medical check, insemination). Area 33 concerns a milking parlor in which there is a milking robot 15. Area 29 is an approaching zone for cows 35, for approaching function areas 31, 32 and 33. The cows 35-1 through 35-5 are individually guided to the different areas 31, 32 and 33 via automatically operable separation gates 38-1, 38-2 and 38-3. When cow 35-3 approaches the separation gates 38-1 through 38-3 from area 29, the gate 38-1 is opened so that cow 35-3 can enter the milking parlor 33. In Figure 2 cow 35-3 is in the milking parlor 33. Cow 35-5 has been separated and is in separation zone 32. Cow 35-4 is in the feeding zone 31.

Each of the cows 35-1 through 35-5 wears an individual smart tag 3-1 through 3-5. The smart tags 3-1 through 3-5 are each provided with a unique identification code with which the respective cow can be recognized. When cow 35-2 approaches the separation gates 38-1 through 38-3, the smart tag 3-2 that belongs to the cow 35-2 is in the interrogation field 40 (represented by a dotted line) which is set up by the control unit 39 with which the separation gates 38-1 through 38-3 are operated. The interrogation field 40 is created with the aid of antenna 41. The smart tag 3-2 is provided with a resonant circuit and in response to the picking up of the interrogation field 40 the smart tag 3-2 sends command data for the opening of one of the gates 38-1 through 38-3. Cow 35-2 has already been milked earlier that day and proceeds to the separation gates to be fed. The smart tag 3-2 is aware that the cow 35-2 has been milked by the milking robot 15 earlier that day, and establishes that separation gate 38-1 does not need to be opened. Furthermore, the smart tag 3-2 knows at what time the cow 35-2 last ate (the evening before) and can determine that it is time for cow 35-2 to be fed. As, furthermore, there are no specific details regarding cow 35-2 that necessitate separation of the cow, the smart tag 3-2 sends command data to unit 39 for the opening of gate 38-2. The control unit 39 for operating the separation gates 38-1 through 38-3 thereupon opens separation gate 38-2 which provides access to the feeding area 31. The cow 35-2 will thereupon enter the feeding area 31.

The cow 35-1, approaching behind cow 35-2, also approaches the control unit 39 for separation gates. Cow 35-1, too, has been milked earlier that day and proceeds in the direction of the feeding area 31. However, the smart tag 3-1 of cow 35-1 contains an algorithm on the ground of which the smart tag can establish whether cow 35-1 is estrous. From the algorithm it follows that cow 35-1 is probably estrous. Furthermore, smart tag 3-1 of cow 35-1 has recorded which smart tags of other cows and bulls were in the vicinity of cow 35-1 earlier that day. From this information, the processor 6 of smart tag 3-1 can gather that one of the bulls has gone near cow 35-1 noticeably often. The estrus of cow 35-1 can now be established with reasonably great certainty and the smart tag 3-1 hence knows that cow 35-1 is estrous and should be separated. Upon approach of the interrogation field 40, the processor 6 of the smart tag 3-1, as soon as the smart tag 3-1 is within the interrogation field 40, sends command data for the opening of separation gate 38-3. These command data are received by control unit 39, and separation gate 38-3 is opened. Inside the separation zone 32 cow 35-1 will be fed separately, and also insemination can take place.

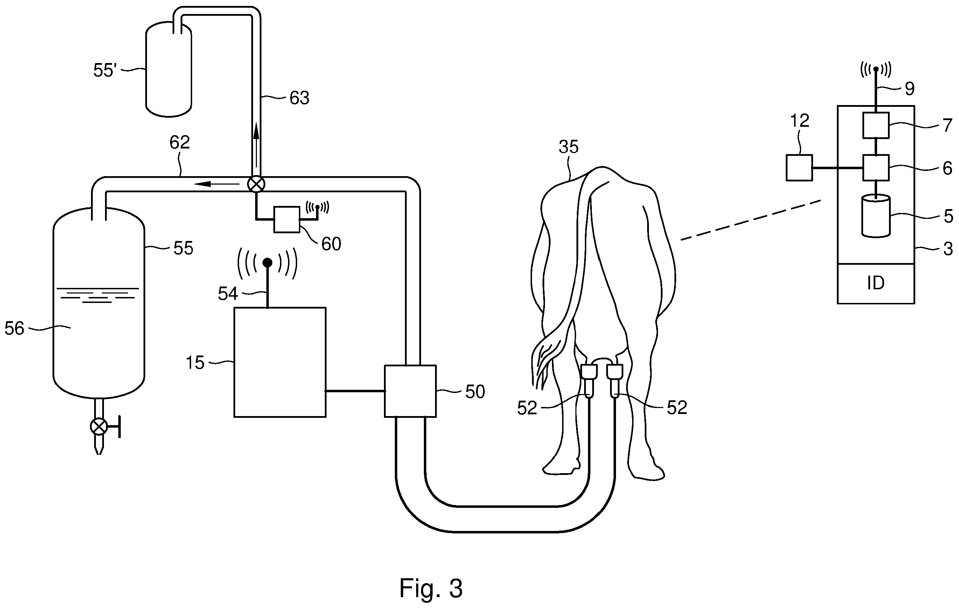

Figure 3 is a schematic outline of a milking robot 15 within a system 1 according to the present invention. Figure 3 shows cow 35 which is provided with a smart tag 3. The smart tag 3 contains a memory 5, processor 6, transmitting and receiving apparatus 7 and antenna 9. Also, the smart tag 3 is connected with a sensor 12. This can be an internal or external sensor of the smart tag 3. The sensor 12 may be, for example, a motion sensor with which movements of the cow 35 can be established to enable an assessment to be made of the behaviors of the cow 35. The milking robot 15 is also provided with an antenna 54 with which an interrogation field can be applied and command data can be received. In alternative embodiments, the interrogation field may be absent and, for example, an optical signal may be generated, such as, for example, an infrared signal, which can be received by the smart tag 3. Also, it is possible with the aid of, for example, ultrasonic sound, to establish the proximity of the milking robot 15 in the vicinity of the smart tag 3. The invention is not limited to the use of an interrogation field. When the cow 35 with its smart tag 3 is in the interrogation field of milking robot 15, the milking robot will automatically attach teat liners 52 to the udders of cow 35. To this end, the smart tag 3 sends command data to the milking robot 15 in order for the teat liners 52 to be attached. After the milking robot has correctly attached the teat liners 52 to the udders of cow 35, milking robot 15 sends the smart tag 3 a confirmation signal after which the smart tag 3 sends command data to the milking robot for starting the milking procedure. In response, milking robot 15 will start milking of cow 35.

The milk is received by the milking robot via receiving unit 50 and then passed on to milk reservoir 55 via line 61. Halfway line 61 is an electrically controllable valve 64 which is controllable with control unit 60. Control unit 60 is also provided with an antenna with which command data from the smart tag 3 can be received. When no special health status of cow 35 is known, the milk 56 which has been received by receiving unit 50 will be passed on via valve 64 to line 62 so that it reaches the reservoir 55. When, however, cow 35 is in calf or has just calved, it is possible that the milk 56 is temporarily not suitable for human consumption, and should be separated by the milking robot 15 from the other milk. In that case, the smart tag 3 knows about the gestation of cow 35, and gives control unit 60 the instruction to set valve 64 such that the milk 56 of cow 35 is conducted via line 63 to alternative reservoir 55'. Upon termination of the milking procedure, milking robot 15 sends a confirmation of the termination of the procedure to smart tag 3, and also passes on the amount of milk drawn. This is stored in the memory 5 and can be forwarded in a later stage to a central computer for administrative purposes.

The above-described specific embodiments of the invention are intended to illustrate the principle of the invention. The invention is only limited by the following claims.

## Claims

1. A system (1) comprising at least one smart tag (3) for animals on a farm and a multiplicity of devices (15, 16, 17, 39) which are configured to have an interaction with the animals, the smart tag (3) being provided with at least one transmitting and receiving apparatus (7), at least one processor (6), at least one memory (5) and at least one sensor (12) which are communicatively connected with each other, **characterized in that** the smart tag (3) is configured to comprise and send out command data intended to selectively control a device of the multiplicity of devices (15, 16, 17, 39) autonomously and wirelessly.

2. The system (1) according to claim 1, **characterized in that** the smart tag (3) is configured to selectively control a device of the multiplicity of devices (15, 16, 17, 39) directly, autonomously and wirelessly.

3. The system (1) according to claim 1 or 2, **characterized in that** the multiplicity of devices (15, 16, 17, 39) comprises at least one controllable automatic feeder (16), while the command data are configured to autonomously control the automatic feeder (16) and relate to the amount of feed and the moment when a portion of feed can be provided by the automatic feeder (16) to an animal wearing the smart tag (3).

4. The system (1) according to claim 3, **characterized in that** the command data are configured to autonomously control the automatic feeder (16) in order that only a desired kind of feed is dispensed to the animal wearing the smart tag (3).

5. The system (1) according to any one of the preceding claims, **characterized in that** the multiplicity of devices (15, 16, 17, 39) comprises at least one controllable access (39) such as a separation gate (38), while the command data are configured to autonomously control the access (39) and determine whether and more particularly when the access (39) can be opened.

6. The system (1) according to any one of the preceding claims, **characterized in that** the multiplicity of devices (15, 16, 17, 39) comprises at least one controllable milking robot (15), while the command data are configured to autonomously control a milking robot (15) and determine whether and, if so, when an animal wearing the smart tag (3) can be milked.

7. The system (1) according to any one of the preceding claims, **characterized in that** the smart tag (3) is so configured that at least a part of the command data has been determined with the aid of the at least one sensor (12) and the at least one processor (6).

8. The system (1) according to any one of the preceding claims, **characterized in that**:
the transmitting and receiving apparatus (7) comprise a resonant circuit which responds by selectively sending out command data when the smart tag (3) is introduced into an electromagnetic interrogation field (40), while the selection depends on a code of the interrogation field (40), and in particular the responding of the resonant circuit is based on LF technology; or
the smart tag (3) is configured to receive sound and in response to the received sound to respond by selectively sending out the command data, said selection depending on the content of the received sound; or
the smart tag (3) is configured to receive light and in response to the received light to respond by selectively sending out the command data, said selection depending on the content of the received light.

9. The system (1) according to claim 8, **characterized in that**, in use, each of the devices (15, 16, 17, 39) is configured to send out an interrogation field (40) with a code representing the type of device or an identity of the device.

10. The system (1) according to any one of the preceding claims, **characterized in that** the smart tag (3) is configured to receive information from at least one of the devices (15, 16, 17, 39) and store the information in the memory (5) so that in particular this information can be read out at the smart tag (3) later.

11. The system (1) according to any one of the preceding claims, **characterized in that** the system (1) further comprises a central computer, while the smart tag (3) is configured to build up a communicative connection with the central computer and/or that the smart tag (3) is configured to build up a communicative connection with a cloud service.

12. The system (1) according to claim 11, **characterized in that** the communicative connection with the central computer and/or the cloud service comprises a Wi-Fi connection and/or internet.

13. The system (1) according to claim 11 or 12, **characterized in that** the smart tag (3) is configured to send data obtained with the at least one sensor (12) to the central computer and/or the cloud service.

14. The system (1) according to claim 10 and claim 11, 12, or 13, **characterized in that** the smart tag (3) is configured to send data obtained from one of the devices (15, 16, 17, 39) to the central computer and/or the cloud service.

15. The system (1) according to any one of claims 11-14, **characterized in that** the central computer and/or the cloud service is configured, on the basis of the received data obtained with the at least one sensor (12), to determine a status of the animal.

16. The system (1) according to any one of the preceding claims, **characterized in that** at least a part of the command data have been received by the smart tag (3) with the aid of the transmitting and receiving apparatus (7).

17. The system (1) according to any one of the preceding claims, **characterized in that** at least a part of the command data have been determined with the aid of the at least one sensor (12) and the at least one processor (6).

18. The system (1) according to at least claim 10, **characterized in that** at least a part of the command data have been determined with the aid of the processor (6) on the basis of data obtained from one of the devices (15, 16, 17, 39).

19. The system (1) according to any one of the preceding claims, **characterized in that** the at least one processor (6) comprises at least one neural network.

20. The system (1) according to any one of the preceding claims, **characterized in that** the smart tag (3) is configured, on the basis of data obtained with the at least one sensor (12), to determine a status of the animal and possibly store information about the status in the memory (5).

## Patentansprüche

1. System (1), umfassend mindestens ein intelligentes Etikett (3) für Tiere auf einem Bauernhof und eine Vielzahl von Vorrichtungen (15, 16, 17, 39), die für die Interaktion mit den Tieren konfiguriert sind, wobei das intelligente Etikett (3) mit mindestens einem Sende- und Empfangsgerät (7), mindestens einem Prozessor (6), mindestens einem Speicher (5) und mindestens einem Sensor (12) bereitgestellt ist, die kommunikativ miteinander verbunden sind, **dadurch gekennzeichnet, dass** das intelligente Etikett (3) dazu konfiguriert ist, Befehlsdaten zu umfassen und auszusenden, die dazu bestimmt sind, selektiv eine Vorrichtung der Vielzahl von Vorrichtungen (15, 16, 17, 39) autonom und drahtlos zu steuern.

2. System (1) nach Anspruch 1, **dadurch gekennzeichnet, dass** das intelligente Etikett (3) dazu konfiguriert ist, selektiv eine Vorrichtung aus der Vielzahl von Vorrichtungen (15, 16, 17, 39) direkt, autonom und drahtlos zu steuern.

3. System (1) nach Anspruch 1 oder 2, **dadurch gekennzeichnet, dass** die Vielzahl von Vorrichtungen (15, 16, 17, 39) mindestens einen steuerbaren Futterautomaten (16) umfasst, wobei die Befehlsdaten dazu konfiguriert sind, den Futterautomaten (16) autonom zu steuern und sich auf die Futtermenge und den Zeitpunkt beziehen, zu dem eine Futterportion durch den Futterautomaten (16) an ein Tier, das das intelligente Etikett (3) trägt, bereitgestellt werden kann.

4. System (1) nach Anspruch 3, **dadurch gekennzeichnet, dass** die Befehlsdaten dazu konfiguriert sind, den Futterautomaten (16) autonom zu steuern, sodass nur eine gewünschte Art von Futter an das Tier, das das intelligente Etikett (3) trägt, ausgegeben wird.

5. System (1) nach einem der vorstehenden Ansprüche, **dadurch gekennzeichnet, dass** die Vielzahl von Vorrichtungen (15, 16, 17, 39) mindestens einen steuerbaren Zugang (39) wie etwa eine Trennschleuse (38) umfasst, während die Befehlsdaten dazu konfiguriert sind, den Zugang (39) autonom zu steuern und zu bestimmen, ob und vor allem wann der Zugang (39) geöffnet werden kann.

6. System (1) nach einem der vorstehenden Ansprüche, **dadurch gekennzeichnet, dass** die Vielzahl von Vorrichtungen (15, 16, 17, 39) mindestens einen steuerbaren Melkroboter (15) umfasst, während die Befehlsdaten dazu konfiguriert sind, einen Melkroboter (15) autonom zu steuern und zu bestimmen, ob und, wenn ja, wann ein Tier, das das intelligente Etikett (3) trägt, gemolken werden kann.

7. System (1) nach einem der vorstehenden Ansprüche, **dadurch gekennzeichnet, dass** das intelligente Etikett (3) so konfiguriert ist, dass mindestens ein Teil der Befehlsdaten mit der Hilfe des mindestens einen Sensors (12) und des mindestens einen Prozessors (6) bestimmt wurde.

8. System (1) nach einem der vorstehenden Ansprüche, **dadurch gekennzeichnet, dass**:
das Sende- und Empfangsgerät (7) einen Schwingkreis umfasst, der durch selektives Aussenden von Befehlsdaten antwortet, wenn das intelligente Etikett (3) in ein elektromagnetisches Abfragefeld (40) eingeführt wird, wobei die Auswahl von einem Code des Abfragefeldes (40) abhängt, und insbesondere das Antworten des Schwingkreises auf der LF-Technologie basiert; oder
das intelligente Etikett (3) dazu konfiguriert ist, Ton zu empfangen und als Reaktion auf den empfangenen Ton durch selektives Aussenden der Befehlsdaten zu antworten, wobei die Auswahl von dem Inhalt des empfangenen Tons abhängt; oder
das intelligente Etikett (3) dazu konfiguriert ist, Licht zu empfangen und als Reaktion auf das empfangene Licht mit dem selektiven Aussenden der Befehlsdaten zu antworten, wobei die Auswahl von dem Inhalt des empfangenen Lichts abhängt.

9. System (1) nach Anspruch 8, **dadurch gekennzeichnet, dass** bei Verwendung jede der Vorrichtungen (15, 16, 17, 39) dazu konfiguriert ist, ein Abfragefeld (40) mit einem Code auszusenden, der die Art der Vorrichtung oder eine Identität der Vorrichtung darstellt.

10. System (1) nach einem der vorstehenden Ansprüche, **dadurch gekennzeichnet, dass** das intelligente Etikett (3) dazu konfiguriert ist, Informationen von mindestens einer der Vorrichtungen (15, 16, 17, 39) zu empfangen und die Informationen in dem Speicher (5) zu speichern, sodass insbesondere diese Informationen später an dem intelligenten Etikett (3) ausgelesen werden können.

11. System (1) nach einem der vorstehenden Ansprüche, **dadurch gekennzeichnet, dass** das System (1) ferner einen Zentralrechner umfasst, wobei das intelligente Etikett (3) dazu konfiguriert ist, eine kommunikative Verbindung mit dem Zentralrechner aufzubauen und/oder dass das intelligente Etikett (3) dazu konfiguriert ist, eine kommunikative Verbindung mit einem Cloud-Dienst aufzubauen.

12. System (1) nach Anspruch 11, **dadurch gekennzeichnet, dass** die kommunikative Verbindung mit dem Zentralrechner und/oder dem Cloud-Dienst eine WiFi-Verbindung und/oder Internet umfasst.

13. System (1) nach Anspruch 11 oder 12, **dadurch gekennzeichnet, dass** das intelligente Etikett (3) dazu konfiguriert ist, mit dem mindestens einen Sensor (12) erhaltene Daten an den Zentralrechner und/oder den Cloud-Dienst zu senden.

14. System (1) nach Anspruch 10 und Anspruch 11, 12 oder 13, **dadurch gekennzeichnet, dass** das intelligente Etikett (3) dazu konfiguriert ist, von einer der Vorrichtungen (15, 16, 17, 39) erhaltene Daten an den Zentralrechner und/oder den Cloud-Dienst zu senden.

15. System (1) nach einem der Ansprüche 11 bis 14, **dadurch gekennzeichnet, dass** der Zentralrechner und/oder der Cloud-Dienst dazu konfiguriert ist, auf der Basis der mit dem mindestens einen Sensor (12) erhaltenen Daten, einen Status des Tieres zu bestimmen.

16. System (1) nach einem der vorstehenden Ansprüche, **dadurch gekennzeichnet, dass** mindestens ein Teil der Befehlsdaten von dem intelligenten Etikett (3) mit der Hilfe des Sende- und Empfangsgeräts (7) empfangen wurde.

17. System (1) nach einem der vorstehenden Ansprüche, **dadurch gekennzeichnet, dass** mindestens ein Teil der Befehlsdaten mit der Hilfe des mindestens einen Sensors (12) und des mindestens einen Prozessors (6) bestimmt wurde.

18. System (1) nach mindestens Anspruch 10, **dadurch gekennzeichnet, dass** mindestens ein Teil der Befehlsdaten mit der Hilfe des Prozessors (6) auf der Basis von einer der Vorrichtungen (15, 16, 17, 39) erhaltenen Daten bestimmt wurde.

19. System (1) nach einem der vorstehenden Ansprüche, **dadurch gekennzeichnet, dass** der mindestens eine Prozessor (6) mindestens ein neuronales Netz umfasst.

20. System (1) nach einem der vorstehenden Ansprüche, **dadurch gekennzeichnet, dass** das intelligente Etikett (3) dazu konfiguriert ist, auf der Basis von mit dem mindestens einen Sensor (12) erhaltenen Daten einen Status des Tieres zu bestimmen und möglicherweise Informationen über den Status in dem Speicher (5) zu speichern.

## Revendications

1. Système (1) comprenant au moins une étiquette intelligente (3) pour des animaux d'une ferme et une multiplicité de dispositifs (15, 16, 17, 39) qui sont configurés pour avoir une interaction avec les animaux, l'étiquette intelligente (3) étant pourvue d'au moins un appareil d'émission et de réception (7), d'au moins un processeur (6), d'au moins une mémoire (5) et d'au moins un capteur (12) qui sont connectés entre eux de manière communicative, **caractérisé en ce que** l'étiquette intelligente (3) est configurée pour comprendre et envoyer des données d'instruction destinées à commander de manière sélective un dispositif de la multiplicité de dispositifs (15, 16, 17, 39) de manière autonome et sans fil.

2. Système (1) selon la revendication 1, **caractérisé en ce que** l'étiquette intelligente (3) est configurée pour commander de manière sélective un dispositif de la multiplicité de dispositifs (15, 16, 17, 39) directement, de manière autonome et sans fil.

3. Système (1) selon la revendication 1 ou 2, **caractérisé en ce que** la multiplicité de dispositifs (15, 16, 17, 39) comprend au moins un nourrisseur automatique (16) commandable, tandis que les données d'instruction sont configurées pour commander de manière autonome le nourrisseur automatique (16) et se rapportent à la quantité de nourriture et au moment où une portion de nourriture peut être fournie par le nourrisseur automatique (16) à un animal portant l'étiquette intelligente (3).

4. Système (1) selon la revendication 3, **caractérisé en ce que** les données d'instruction sont configurées pour commander de manière autonome le nourrisseur automatique (16) de manière à ce que seul un type de nourriture souhaité soit distribué à l'animal portant l'étiquette intelligente (3).

5. Système (1) selon l'une quelconque des revendications précédentes, **caractérisé en ce que** la multiplicité de dispositifs (15, 16, 17, 39) comprend au moins un accès (39) commandable tel qu'une grille de séparation (38), tandis que les données d'instruction sont configurées pour commander de manière autonome l'accès (39) et déterminer si, et plus particulièrement quand, l'accès (39) peut être ouvert.

6. Système (1) selon l'une quelconque des revendications précédentes, **caractérisé en ce que** la multiplicité de dispositifs (15, 16, 17, 39) comprend au moins un robot de traite (15) commandable, tandis que les données d'instruction sont configurées pour commander de manière autonome un robot de traite (15) et déterminer si et, le cas échéant, quand, un animal portant l'étiquette intelligente (3) peut être trait.

7. Système (1) selon l'une quelconque des revendications précédentes, **caractérisé en ce que** l'étiquette intelligente (3) est configurée de sorte qu'au moins une partie des données d'instruction a été déterminée à l'aide de l'au moins un capteur (12) et de l'au moins un processeur (6).

8. Système (1) selon l'une quelconque des revendications précédentes, **caractérisé en ce que** :
l'appareil d'émission et de réception (7) comprend un circuit résonant qui répond en envoyant sélectivement des données d'instruction lorsque l'étiquette intelligente (3) est introduite dans un champ d'interrogation électromagnétique (40), tandis que la sélection dépend d'un code du champ d'interrogation (40), et en particulier la réponse du circuit résonant est basée sur une technologie LF ; ou
l'étiquette intelligente (3) est configurée pour recevoir du son et en réponse au son reçu pour répondre en envoyant sélectivement les données d'instruction, ladite sélection dépendant du contenu du son reçu ; ou
l'étiquette intelligente (3) est configurée pour recevoir de la lumière et en réponse à la lumière reçue pour répondre en envoyant sélectivement les données d'instruction, ladite sélection dépendant du contenu de la lumière reçue.

9. Système (1) selon la revendication 8, **caractérisé en ce que**, en utilisation, chacun des dispositifs (15, 16, 17, 39) est configuré pour envoyer un champ d'interrogation (40) avec un code représentant le type de dispositif ou une identité du dispositif.

10. Système (1) selon l'une quelconque des revendications précédentes, **caractérisé en ce que** l'étiquette intelligente (3) est configurée pour recevoir des informations provenant d'au moins un des dispositifs (15, 16, 17, 39) et stocker les informations dans la mémoire (5) de sorte que, en particulier, ces informations puissent être lues au niveau de l'étiquette intelligente (3).

11. Système (1) selon l'une quelconque des revendications précédentes, **caractérisé en ce que** le système (1) comprend en outre un ordinateur central, tandis que l'étiquette intelligente (3) est configurée pour établir une connexion communicative avec l'ordinateur central et/ou que l'étiquette intelligente (3) est configurée pour établir une connexion communicative avec un service infonuagique.

12. Système (1) selon la revendication 11, **caractérisé en ce que** la connexion communicative avec l'ordinateur central et/ou le service infonuagique comprend une connexion Wi-Fi et/ou Internet.

13. Système (1) selon la revendication 11 ou 12, **caractérisé en ce que** l'étiquette intelligente (3) est configurée pour envoyer des données obtenues avec l'au moins un capteur (12) à l'ordinateur central et/ou au service infonuagique.

14. Système (1) selon la revendication 10 et la revendication 11, 12 ou 13, **caractérisé en ce que** l'étiquette intelligente (3) est configurée pour envoyer des données obtenues à partir de l'un des dispositifs (15, 16, 17, 39) à l'ordinateur central et/ou au service infonuagique.

15. Système (1) selon l'une quelconque des revendications 11 à 14, **caractérisé en ce que** l'ordinateur central et/ou le service infonuagique sont configurés, sur la base des données reçues obtenues avec l'au moins un capteur (12), pour déterminer un état de l'animal.

16. Système (1) selon l'une quelconque des revendications précédentes, **caractérisé en ce qu'**au moins une partie des données d'instruction a été reçue par l'étiquette intelligente (3) à l'aide de l'appareil d'émission et de réception (7).

17. Système (1) selon l'une quelconque des revendications précédentes, **caractérisé en ce qu'**au moins une partie des données d'instruction a été déterminée à l'aide de l'au moins un capteur (12) et de l'au moins un processeur (6).

18. Système (1) selon au moins la revendication 10, **caractérisé en ce qu'**au moins une partie des données d'instruction a été déterminée à l'aide du processeur (6) sur la base de données obtenues à partir de l'un des dispositifs (15, 16, 17, 39).

19. Système (1) selon l'une quelconque des revendications précédentes, **caractérisé en ce que** l'au moins un processeur (6) comprend au moins un réseau neuronal.

20. Système (1) selon l'une quelconque des revendications précédentes, **caractérisé en ce que** l'étiquette intelligente (3) est configurée, sur la base de données obtenues avec l'au moins un capteur (12), pour déterminer un état de l'animal et éventuellement stocker des informations concernant l'état dans la mémoire (5).
